(19) Europäisches Patentamt
European Patent Office
Office européen des brevets

(11) **EP 3 429 209 A1**

(12) **EUROPEAN PATENT APPLICATION**

(43) Date of publication:
**16.01.2019 Bulletin 2019/03**

(21) Application number: **17305930.4**

(22) Date of filing: **13.07.2017**

(51) Int Cl.:
*H04N 19/597* (2014.01)  *G06T 17/00* (2006.01)
*G06T 17/10* (2006.01)  *G06T 9/40* (2006.01)
*H04N 19/96* (2014.01)  *H04N 19/20* (2014.01)
*H04N 19/147* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **LASSERRE, Sebastien
35576 CESSON-SEVIGNE (FR)**
• **CHEVET, Jean-Claude
35576 CESSON-SEVIGNE (FR)**
• **CAI, Kangying
35576 CESSON-SEVIGNE (FR)**

(74) Representative: **Huchet, Anne et al
InterDigital CE Patent Holdings
20, rue Rouget de Lisle
92130 Issy-les-Moulineaux (FR)**

(54) **A METHOD AND APPARATUS FOR ENCODING/DECODING A POINT CLOUD REPRESENTING A 3D OBJECT**

(57) The present principles relate to an architecture of a coding scheme that encodes depth images (and optionally texture images) obtained by projecting a point cloud on surfaces associated with volumes of a structure of projection. A global octree-based structure is also obtained from the point cloud and an inverse-projected point cloud obtained by inverse projecting the decoded depth images (and optionally decoded texture images).

**Fig. 1a**

**Fig. 1b**

**Description**

**1. Field.**

The present principles generally relate to coding and decoding of a point cloud representing a 3D object. Particularly, but not exclusively, the technical field of the present principles are related to encoding/decoding of 3D image data that uses a texture and depth projection scheme.

**2. Background.**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair, fur that may not be represented efficiently by other data format like meshes. Each point of a point cloud is often defined by a 3D spatial location (X, Y, and Z coordinates in the 3D space) and possibly by other associated attributes such as color, represented in the RGB or YUV color space for example, a transparency, a reflectance, a two-component normal vector, etc.

In the following, a colored point cloud is considered, i.e. a set of 6-component points (X, Y, Z, R, G, B) or equivalently (X, Y, Z, Y, U, V) where (X,Y,Z) defines the spatial location of a point in a 3D space and (R,G,B) or (Y,U,V) defines a color of this point.

Colored point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, colored point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decision based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of sensed object and may help the decision.

Virtual Reality (VR) and immersive worlds have become a hot topic recently and foreseen by many as the future of 2D flat video. The basic idea is to immerse the viewer in an environment all around him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches project a colored point cloud representing the geometry and colors of a 3D object, onto the faces of a cube encompassing the 3D object to obtain videos on texture and depth, and code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I).

Performance of compression is close to video compression for each projected point, but some contents may be more complex because of occlusions, redundancy and temporal stability when dynamic point clouds are considered. Consequently, point cloud compression is more demanding than video compression in term of bit-rates.

Regarding occlusions, it is virtually impossible to get the full geometry of a complex topology without using many projections. The required resources (computing power, storage memory) for encoding/decoding all these projections are thus usually too high.

Regarding redundancy, if a point is seen twice on two different projections, then its coding efficiency is divided by two, and this can easily get much worse if a high number of projections is used. One may use non-overlapping patches before projection, but this makes the projected partition boundary unsmooth, thus hard to code, and this negatively impacts the coding performance.

Regarding temporal stability, non-overlapping patches before projection may be optimized for an object at a given time but, when this object moves, patch boundaries also move and temporal stability of the regions hard to code (= the boundaries) is lost. Practically, one gets compression performance not much better than all-intra coding because the temporal inter prediction is inefficient in this context.

Therefore, there is a trade-off to be found between seeing points at most once but with projected images that are not well compressible (bad boundaries), and getting well compressible projected images but with some points seen several times, thus coding more points in the projected images than actually belonging to the model.

## 3. Summary.

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles relate to an architecture of a coding scheme that encodes depth images (and optionally texture images) obtained by projecting a point cloud on surfaces associated with volumes of a structure of projection.

Using a structure of projection puts flexibility on the volume positions to be able to capture occlusions finely.

Preferably, projections on cubes are used for easy implementation.

Using a cascade of projections represented by a structure of projection allows to better encodes parts of the 3D object that are usually missed or encoded using a lot of independent projections. High compression performance is then obtained compared to the prior art especially when the texture and depth are encoded by a legacy video codec because the coding scheme then benefits from the high coding efficiency of this legacy codec provided by temporal inter prediction or arithmetic coding for example.

A global octree-based structure is also obtained from the point cloud and an inverse-projected point cloud obtained by inverse projecting the decoded depth images (and optionally decoded texture images). The geometry of the points of said global octree-based structure is encoded by using an octree-based approach and, optionally, the colors of each point are mapped onto a 2D colored image that is then encoded by a legacy coder.

Encoding a global octree-based structure allows to get rid of remaining occlusions still present after projections, and thus allows a better reconstruction of the point cloud after decoding of both the global octree-based structure and the inverse-projected point cloud. Also some complex topologies with little spatial correlation (like hairs for instance) are naturally better compressed using octrees instead of projections.

The present principles relates to a method and a device for encoding a point cloud representing a 3D object. The method comprises:

a) encoding at least one depth image obtained by projecting the points of the point cloud onto at least one surface;
b) obtaining an inverse-projected point cloud by inverse-projecting said at least one depth image;
c) determining if a local octree-based structure is associated with an encompassing cube including at least one point of the point cloud by optimizing a trade-off between a bit-rate for encoding a candidate octree-based structure approximating the geometry of points of the point cloud which are included in said encompassing cube, and a distortion taking into account spatial distances between, on one hand, said points of the point cloud which are included in said encompassing cube, and on the other hand, points which are included in leaf cubes associated with leaf nodes of the candidate octree-based structure together with points of said inverse-projected point cloud which are included in said encompassing cube;
d) encoding a first leaf node information data indicating if a local octree-based structure has been determined for said encompassing cube;
e) if said first leaf node information data indicates that a local octree-based structure has been determined for said encompassing cube,

- encoding an octree information data representative of said determined local octree-based structure; and
- encoding a second leaf node information data indicating if a leaf cube of said local octree-based structure includes a point representative of a part of the point cloud.

According to an embodiment, a surface is associated with a volume of a structure of projection.

According to an embodiment, said projection and inverse-projection are driven by projection information data representative of said at least one surface.

According to an embodiment, projection information data is representative of the structure of projection.

According to an embodiment, the method also comprises a step of or the device comprises means for encoding said projection information data.

According to an embodiment, the volume is a cube, a surface is a face of said cube and the structure of projection is an octree-based structure of projection.

According to an embodiment, the method also comprises steps of or the device also comprises means for:

- determining an octree-based structure comprising at least one cube, by splitting recursively said encompassing cube until the leaf cubes, associated with the leaf nodes of said octree-based structure, reach down an expected size;
- encoding another octree information data representative of the octree-based structure; and
- encoding each leaf cube, associated with the leaf nodes of said octree-based structure, from steps c-e).

According to an embodiment, the method also comprises obtaining a texture image per depth image by projecting the points of the point cloud onto a surface.

According to an embodiment, encoding a depth image depends on the texture image associated with said depth image.

According to an embodiment, the inverse-projected point cloud IPPC is obtained by encoding and decoding said at least one depth image and by inverse-projecting said at least one decoded depth image, or by encoding and decoding said at least one depth image and said at least one texture image and by inverse-projecting said at least one decoded depth image and said at least one decoded texture image.

According to an embodiment, the method also comprises step for or the device also comprises means for encoding an image obtained from the colors of leaf points located in cubes associated with leaf nodes of said at least one local octree-based structure, the colors of said leaf points being representative of the colors of the points of the point cloud.

According to another of their aspects, the present principles relates to a method or a device for decoding, from at least one bitstream, a point cloud representing a 3D object. The method comprises:

- obtaining an inverse-projected point cloud by:

  - decoding, from a bitstream, at least one depth image;
  - inverse-projecting said at least one decoded depth image, said inverse-projection being driven by projection information data representative of at least one surface;

    f) decoding, from a bitstream, a first leaf node information data indicating if a local octree-based structure has been determined for an encompassing cube including at least one point representing at least a part of the point cloud to be decoded;
    g) if said first leaf node information data indicates that a local octree-based structure has been determined for said encompassing cube,

    h) decoding an octree information data representative of said determined local octree-based structure, and a second leaf node information data indicating if a leaf cube of said local octree-based structure includes a point representative of a part of the point cloud;
    i) obtaining a local octree-based structure for said encompassing cube from said octree information data;
    j) determining if a leaf cube of said local octree-based structure includes a point of the point cloud to be decoded from said second leaf node information data, and in this case, adding a leaf point to the leaf cube of said local octree-based structure; and

- obtaining a decoded point cloud by fusing said inverse-projected point cloud and said local octree-based structure.

According to an embodiment, the surface is a face of a cube of an octree-based structure of projection.

According to an embodiment, the method also comprises a step of or the device also comprises means for decoding, from a bitstream, projection information data representative of said at least one surface.

According to an embodiment, the method also comprises a step of or the device also comprises means for decoding, from a bitstream, projection information data representative of the octree-based structure of projection.

According to an embodiment, the method also comprises a step of or the device also comprises means for:

- obtaining a global octree-based structure by:

    - decoding, from a bitstream, another octree information data;
    - obtaining an octree-based structure from said another octree information data; and
    - for each of the leaf cube of said octree-based structure,

        - obtaining a local octree-based structure for said leaf cube from steps f-j);
        - obtaining the global octree-based structure by replacing a leaf node of the octree-based structure associated with said leaf cube by said local octree-based structure; and

- obtaining a decoded point cloud by fusing said inverse-projected point cloud and said global octree-based structure.

According to an embodiment, the method also comprises a step of or the device also comprises means for decoding a texture image per depth image.
According to an embodiment, wherein decoding a depth image depends on the texture image associated with said depth image.
According to an embodiment, the method also comprises a step of or the device also comprises means for:

- obtaining the color of a point of the decoded point cloud by scanning a decoded image, obtained by decoding a bitstream, according to a specific 2D path, and to ordered leaf cubes associated with the leaf nodes of said local octree-based structure or said global octree-based structure.

According to another of their aspects, the present principles also relates to a signal carrying on at least one depth image obtained by orthogonally projecting points of an input colored point cloud onto a surface and a first leaf node information data indicating if a local octree-based structure has been determined for an encompassing cube including at least one point of said input colored point cloud.
According to an embodiment, the signal also carrying on a first octree information data representative of an octree-based structure, for each leaf cube associated with the leaf nodes of said octree-based structure, a first leaf node information data indicating if a local octree-based structure has been determined for said leaf cube.
According to an embodiment, the signal also carries a second octree information data representative of a local octree-based structure, and a second leaf node information data indicating if a leaf cube of said local octree-based structure includes a point representative of a part of the point cloud.
The specific nature of the present principles as well as other objects, advantages, features and uses of the present principles will become evident from the following description of examples taken in conjunction with the accompanying drawings.

**4. Brief Description of Drawings.**

In the drawings, examples of the present principles are illustrated. It shows:

- **Fig. 1a** shows schematically a diagram of the steps of the method for encoding a point cloud representing a 3D object in accordance with an example of the present principles;
- **Fig. 1b** shows schematically a diagram of the steps of a variant of the method of **Fig. 1a;**
- **Fig. 2** illustrates an example of an octree-based structure;
- **Fig. 3** shows a diagram of the sub-steps of the step 100 in accordance with an embodiment of the present principles;
- **Fig. 4** shows a diagram of the sub-steps of the step 300 in accordance with an embodiment of the present principles;
- **Fig. 5** shows a diagram of the sub-steps of the step 150 in accordance with an embodiment of the present principles;
- **Fig. 6** shows an illustration of an example of a candidate octree-based structure;
- **Fig. 7** shows an illustration of an example of neighboring Largest Octree Units;
- **Fig. 8** shows a diagram of the sub-steps of the step 190 in accordance with an embodiment of the present principles;
- **Fig. 9** shows an example of a 3D Hilbert path;
- **Fig. 10** shows an illustration of an example of the method of **Fig. 8**;
- **Fig. 11** shows an illustration of an orientation system;
- **Fig. 12** shows an example of orientations when a 3D Hilbert path is characterized by the orientation system of **Fig. 11;**
- **Fig. 13** shows a diagram of the sub-steps of the step 800 in accordance with an embodiment of the present principles;
- **Fig. 14** shows an example of a specific node numbering order;

- **Fig. 15** shows an example of orientations and local numbers assigned to sub-cubes following a specific node numbering order;
- **Fig. 16** shows an illustration of a continuous 2D Z-scan curve;
- **Fig. 17** shows an illustration of a continuous 2D Peano curve;
- **Fig. 18** shows an illustration of a block-based 2D raster scanning path;
- **Fig. 19** shows an illustration of a block-based 2D Hilbert scanning path;
- **Fig. 20a** shows schematically a diagram of the steps of the method for decoding, from at least one bitstream, a colored point cloud representing a 3D object in accordance with an example of the present principles;
- **Fig. 20b** shows schematically a diagram of the steps of a variant of the method of **Fig. 20a**;
- **Fig. 21** shows an illustration of the method of **Fig. 20a-b;**
- **Fig. 22** shows an example of an architecture of a device in accordance with an example of present principles; and
- **Fig. 23** shows two remote devices communicating over a communication network in accordance with an example of present principles;
- **Fig. 24** shows the syntax of a signal in accordance with an example of present principles.

Similar or same elements are referenced with the same reference numbers.

## 6. Description of Example of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding a colored point cloud but extends to the encoding/decoding of a sequence of colored point clouds because each colored point cloud of the sequence is sequentially encoded/decoded as described below.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of nv values, where nv is the number of components. Each value of a vector is represented with a number of bits which defines a maximal dynamic range of the pixel values.

A texture image is an image whose pixel values represents colors of 3D points and a depth image is an image whose pixel values depths of 3D points. Usually, a depth image is a grey levels image.

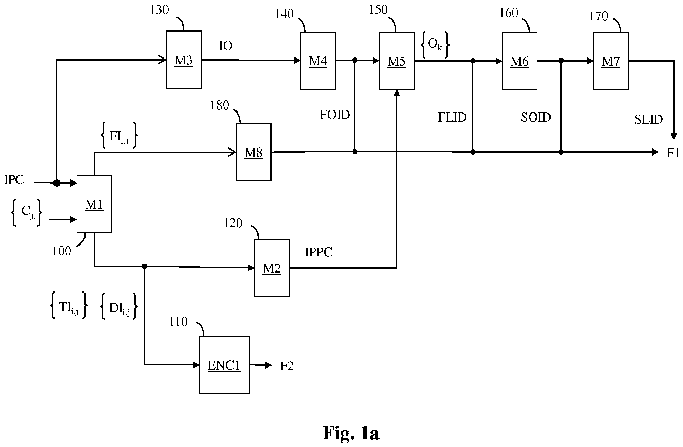

**Fig. 1a** shows schematically a diagram of the steps of the method for encoding a point cloud IPC representing a 3D object.

In step 100, a module M1 obtains at least one depth image ($DI_{i,j}$) by projecting, onto at least one surface $F_{i,j}$ associated with at least one volume $C_j$ of a structure of projection, the points of the point cloud IPC which are included in said at least one volume $C_j$.

The index **i** refers to the index of a surface or a depth image associated with a volume, and the index **j** refers to the index of a volume of said structure of projection.

A volume $C_j$ may be a part of the 3D volume encompassing the whole point cloud IPC, or said 3D volume. Thus, a structure of projection comprises a set $\{C_j\}$ of at least one volume $C_j$ and at least one surface $F_{i,j}$ associated with a volume $C_j$. Said at least one surface $F_{i,j}$ may be a parametric surface whose parameters are defined in order to optimize the projection of at least a part of the point cloud IPC onto said parametric surfaces.

According to a preferred embodiment of step 100, a volume $C_j$ is a cube, a surface is a face of said cube and the structure of projection is an octree-based structure of projection. Then, the module M1 obtains at least one depth image ($DI_{i,j}$) by projecting, onto at least one face $F_{i,j}$ of at least one cube $C_j$ of the octree-based structure of projection, the points of the point cloud IPC which are included in said at least one cube $C_j$. The index i refers to the index (from 1 to 6) of a face or a depth image corresponding to one of the 6 faces of a cube $C_j$.

The surfaces (or faces) $F_{i,j}$ form a set $\{F_{i,j}\}$ of at least one surface (or face), and the depth images $DI_{i,j}$ form a set $\{DI_{i,j}\}$ of at least one depth image.

An octree-based structure comprises a root node, at least one leaf node and possibly intermediate nodes. A leaf node is a node of the octree-based cube which has no child. All other nodes have children. Each node of an octree-based structure is associated with a cube. A leaf cube is a cube associated with a leaf node of an octree-based structure.

An octree-based structure of projection may be obtained by splitting recursively an initial cube associated with the root node and encompassing the input point cloud IPC. Thus, an octree-based structure of projection comprises a set $\{C_j\}$ of at least one cube $C_j$ associated with node(s).

A stopping condition may be checked when a maximum octree depth is reached or when the size of a cube, associated with a node, is smaller than a threshold or when the number of points of the input point cloud 3D included in the cube does not exceed a minimum number.

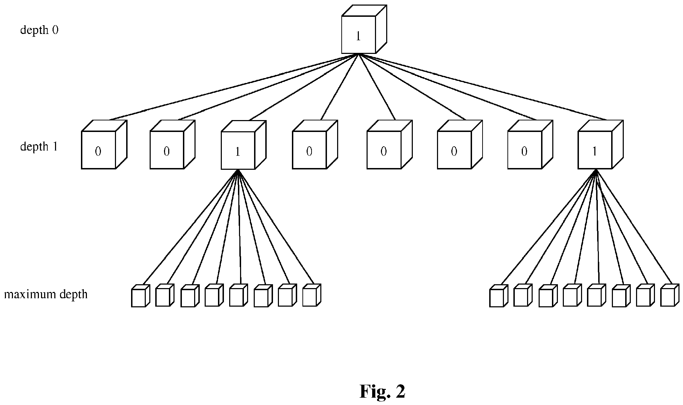

In the example illustrated on **Fig. 2,** the cube associated with the root node (depth 0) is split into 8 sub-cubes (depth 1) and two sub-cubes of depth 1 are then split into 8 sub-cubes (last depth = maximum depth = 2).

The sizes of the cubes of a same depth are usually the same but the present principles are not limited to this example. A specific process may also determine different numbers of sub-cubes per depth, when a cube is split, and/or multiple sizes of cubes of a same depth or according to their depths.

In the following, the term "local octree-based structure determined for a cube" refers to an octree-based structure determined in the 3D space delimited by the cube that encompasses a part of the point cloud to be encoded.

In the opposite, a global octree-based structure refers to an octree-based structure determined in a 3D space delimited by the cube that encompasses the point cloud to be encoded.

In step 110, an encoder ENC1 encodes the set $\{DI_{i,j}\}$ of at least one depth image.

Said at least one encoded depth image may be stored and/or transmitted in a bitstream F2.

In step 120, a module M2 obtains an inverse-projected point cloud IPPC by inverse-projecting said at least one depth image $DI_{i,j}$.

Said inverse projection is the reciprocal process (only for projected points) used in step 100.

According to a variant of step 120, the module M2 uses the encoder ENC1 to encode said at least one depth image $DI_{i,j}$ and obtains the inverse-projected point cloud IPPC by decoding said at least one encoded depth image $DI_{i,j}$ and by inverse-projecting said at least one decoded depth image $DI_{i,j}$.

The inverse-projected point cloud IPPC represents then an approximation of the geometry of the point cloud IPC.

In step 130, a module M3 determines an octree-based structure IO comprising at least one cube, by splitting recursively a cube encompassing the point cloud IPC until the leaf cubes, associated with the leaf nodes of said octree-based structure IO, reach down an expected size.

The leaf cubes associated with the leaf nodes of the octree-based structure IO may then include or not points of the input point cloud IPC. A leaf cube associated with a leaf node of the octree-based structure IO is named in the following a Largest Octree Unit (LOU$_k$), **k** means an index referencing the Largest Octree Unit associated with a leaf node **k** of the octree-based structure IO.

In step 140, a module M4 encodes a first octree information data FOID representative of the octree-based structure IO.

In step 150, for each LOU$_k$, a module M5 determines if a local octree-based structure O$_k$ is associated with a LOU$_k$ by optimizing a trade-off between a bit-rate R$_{k,n}$ for encoding a candidate octree-based structure O$_{k,n}$ approximating the geometry of points $P_{k,or}$ of the point cloud IPC which are included in said LOU$_k$, and a distortion D$_{k,n}$ taking into account spatial distances between, on one hand, said points $P_{k,or}$ of the point cloud IPC, and on the other hand, points $P_{k,n}$ included in leaf cubes associated with leaf nodes of the candidate octree-based structure O$_{k,n}$, and taking into account spatial distances between, on one hand, said points $P_{k,or}$ of the point cloud, and on the other hand, points $P_{k,n}$ included in leaf cubes associated with leaf nodes of the candidate octree-based structure O$_{k,n}$ together with the points $P_{k,IP}$ of the inverse-projected point cloud IPPC which are included in said LOU$_k$.

Mathematically speaking, the distortion D$_{k,n}$ is a metric given by:

$$D_{k,n} = d\left(P_{k,n} \cup P_{k,IP}, P_{k,OR}\right) + d\left(P_{k,OR}, P_{k,n} \cup P_{k,IP}\right)$$

where d(A,B) is a metric that measures the spatial distance from a set of points A to a set of points B. This metric is not symmetric, this means that the distance from A to B differs from the distance from B to A.

The distance $d(P_{k,n} \cup P_{k,IP}, P_{k,OR})$ ensures that the points included in leaf cubes associated with leaf nodes of a candidate octree-based structure O$_{k,n}$ are not too far from the point cloud IPC, avoiding coding irrelevant points.

The distance $d(P_{k,OR}, P_{k,n} \cup P_{k,IP})$ ensures that each point of the point cloud IPC is approximated by points not too far from them, i.e. ensures that parts of the point cloud IPC which are not represented by the inverse-projected point cloud IPPC are well approximated by the points $P_{k,n}$ associated with the octree-based structure O$_{k,n}$.

According to an embodiment, the distance d(A,B) is given by:

$$d(A, B) = \sum_{p \in A} \|p - \mathrm{q}_{\mathrm{closest}}(p, B)\|_2^2$$

where the norm is the Euclidan distance and q$_{\mathrm{closest}}$(p, B) is the closest point of B from a given point p of A defined as

$$\mathrm{q}_{\mathrm{closest}}(p, B) = \underset{q \in B}{\mathrm{argmin}} \|p - q\|_2^2.$$

According to the optimization process, it may happen that a LOU$_k$ does not include any point of the point cloud IPC. In that case the LOU$_k$ is named a non-coded LOU$_k$.

It may also happen that the optimization process determines that the points of the point cloud IPC which are included in the LOUk are not represented (coded) by any candidate octree-based structure O$_{k,n}$. This is the case when the cost for coding those points is too high relatively to the cost associated with R$_{k,n}$ = 0 and the distortion D$_{k,n}$ obtained between already coded points, from other already coded LOU$_k$ and the inverse projected point cloud IPPC, and $P_{k,OR}$. In this case, no local octree-based structure O$_k$ is determined for this LOU$_k$ which is then considered as being a non-coded LOU$_k$.

In step 150, for each LOU$_k$, associated with the leaf nodes of said octree-based structure IO, the module M5 also encodes a first leaf node information data FLID indicating if a local octree-based structure O$_k$ has been determined for said LOU$_k$.

For example, this data FLID may be a flag set to 1 if a local octree-based structure O$_k$ is associated to the LOU$_k$, and set to 0 otherwise, i.e. if the LOU$_k$ is a non-coded LOU$_k$.

If a first leaf node information data FLID indicates that a local octree-based structure O$_k$ has been determined for a LOU$_k$, in step 160 a module M6 encodes a second octree information data SOID representative of said determined local octree-based structure $O_k$, and in step 170, a module M7 encodes a second leaf node information data SLID indicating if a leaf cube of said local octree-based structure $O_k$ includes a point representative of a part of the point cloud IPC.

The first octree information data FOID, the first leaf node information data FLID, the second octree information data SOID and the second leaf node information data SLID may be stored and/or transmitted in a bitstream F1.

Optionally, in step 180, the module M8 encodes projection information data representative of the set of said at least one surface (or face of cube) $F_{i,j}$. Projection information data drive both the projection of the point cloud IPC onto the surfaces (or faces) and the inverse projection from the surfaces (or faces) to obtain an inverse-projected point cloud IPPC (step 120).

In a variant of step 180, the structure of projection (octree-based structure of projection) may be known beforehand by a decoder, and no information data representative of the structure of projection (octree-based structure of projection) is coded by the module M8.

In another variant of step 180, the module M8 also encodes projection information data representative of the structure of projection (octree-based structure of projection).

The encoded projection information data may be stored and/or transmitted in a bitstream F1.

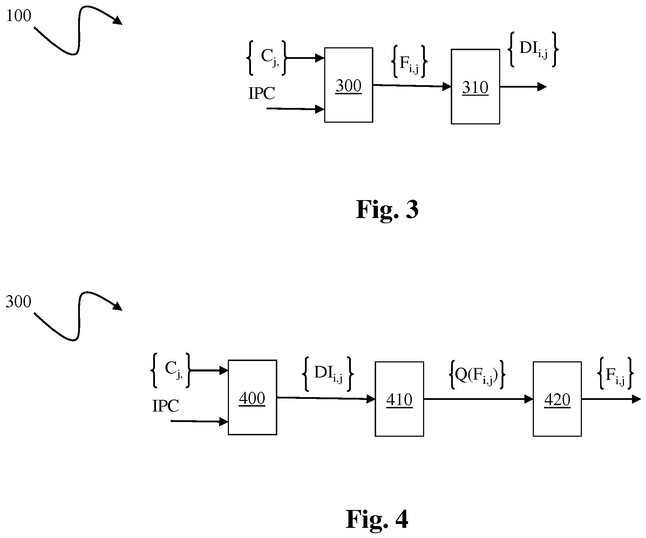

According to an embodiment of step 100, illustrated in **Fig. 3,** in step 300, the module M1 determines which surfaces $F_{i,j}$ associated with each volume $C_j$ of the set $\{C_j\}$ are selected according to a metric $Q(F_{i,j})$ representative of the capability of a depth images $DI_{i,j}$, associated with a surface $F_{i,j}$ of a volume $C_j$, to efficiently compress the projections of the points of the point cloud IPC which are included in the volume $C_j$ onto the surface $F_{i,j}$.

In step 310, the module M1 obtains one depth image $DI_{i,j}$ for each selected surface $F_{i,j}$ by projecting, onto the selected surface $F_{i,j}$ associated with a volume $C_j$, the points of the point cloud IPC which are included in the volume $C_j$.

**Fig. 4** shows a diagram of the sub-steps of the step 300 in accordance with an embodiment of the present principles.

In step 400, each volume $C_j$ of the structure of projection is considered and the module M1 projects the points of the point cloud IPC which are included in the volume $C_j$ onto each of the surfaces $F_{i,j}$ associated with said volume $C_j$ in order to obtain a depth image $DI_{i,j}$ for each of said surfaces $F_{i,j}$.

According to a preferred embodiment, the surfaces $F_{i,j}$ may be the six faces associated with a cube $C_j$.

In step 410, the module M1 calculates a metric $Q(F_{i,j})$ for each of the depth images associated with the surfaces $F_{i,j}$.

According to an embodiment, the metric $Q(F_{i,j})$ is responsive to the ratio of the total number N_total(i,j) of pixels, corresponding to the projection of the part of the point cloud IPC which are included in the volume $C_j$, over the number N_new(i,j) of newly seen points. A point is considered as being "newly seen" when the point has not been projected on a previously selected surface.

If no new point is seen by the projection of the part of the point cloud IPC onto a surface $F_{i,j}$, said ratio becomes infinite. On the contrary, if all points are new, this ratio is equal to 1.

In step 420, the module M1 selects a surface $F_{i,j}$ when the metric $Q(F_{i,j})$ is lower than or equal to a threshold Q_acceptable:

$$Q(F_{i,j}) \leq Q\_acceptable$$

Then, none or at least one surface may be selected per volume.

A possible value is Q_acceptable=2, stating that at least half the projected point should be new to select a projection. It is understood that these examples are not restricted to this specific value that is provided as example only.

According to an embodiment of step 140 and/or 160, the first octree information data FOID and the second octree information data SOID comprises a binary flag per node which equal to 1 to indicate that a cube associated with said node is split and to 0 otherwise.

According to an optional variant of step 140, the module M4 generates a maximum depth of the cube splitting.

This avoids signaling first octree information data for all cubes having the maximum depth.

According to an embodiment of step 150, the first leaf node information data FLID comprises a binary flag per leaf node which equal to 1 to indicate if a local octree-based structure $O_k$ has been determined for a $LOU_k$ and to 0 otherwise (for signaling non-coded $LOU_k$).

According to an embodiment of step 170, the second leaf node information data SLID comprises a binary flag per leaf node which equal to 1 to indicate if a leaf cube of a local octree-based structure $O_k$ includes a point representative of a part of the point cloud IPC and to 0 otherwise.

According to an embodiment, the first octree information data FOID, the first leaf node information data FLID, the second octree information data SOID and/or the second leaf node information data SLID may be coded using an entropy coder like CABAC (a description of the CABAC is found in the specification of HEVC at http://www.itu.int/rec/T-REC-H.265-201612-I/en).

Entropy encoding the second octree information data SOID and/or the second leaf node information data SLID may be efficient in term of coding, because specific contexts may be used to code the binary flags per node because usually only a few nodes of an octree-based structure are split and the probability for the binary flags associated with neighboring nodes to have a same value is high.

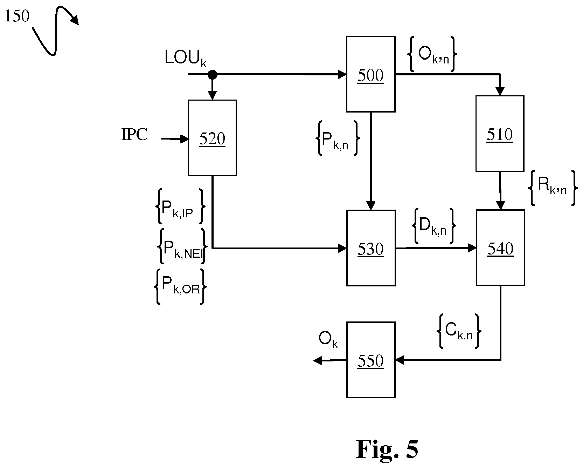

**Fig. 5** shows the diagram of the sub-steps of the step 150 in accordance with an embodiment of the present principles.

As discussed above, an octree-based structure IO comprising at least one $LOU_k$ is obtained, and a Rate Distortion optimization (RDO) process is used to determine a best local octree-based structure $O_k$ for at least one $LOU_k$.

A single flag may be encoded in the bitstream F1 to indicate if a $LOU_k$ includes or not a point of the point cloud IPC.

A RDO process that is performed on an $LOU_k$ may find a best local octree-based structure $O_k$ from N candidate octree-based structures $O_{k,n}$ ($n \in [1; N]$). The basic principle is to test successively each candidate octree-based structure $O_{k,n}$, and for each candidate octree-based structure $O_{k,n}$ to calculate a Lagrangian cost $C_{k,n}$ given by:

$$C_{k,n} = D_{k,n} + \lambda R_{k,n} \quad (1)$$

where $R_{k,n}$ and $D_{k,n}$ are respectively the bit-rate and distortion detailed above, and A is a fixed Lagrange parameter that may be fixed for all the candidate octree-based structures $O_{k,n}$.

The best local octree-based structure $O_k$ is then obtained by minimizing the Lagrangian cost $C_{k,n}$:

$$O_k = \underset{O_{k,n}}{\mathrm{argmin}}\, C_{k,n}(O_{k,n}) \quad (2)$$

High values for the Lagrangian parameter strongly penalize the bit-rate $R_{k,n}$ and lead to a low quality of approximation, while low values for the Lagrangian parameter allow easily high values for $R_{k,n}$ and lead to high quality of approximation. The range of values for lambda depends on the distortion metric, the size of the $LOU_k$, and most importantly the distance between two adjacent points. Assuming that this distance is unity, typical values for lambda are in the range from a few hundreds, for very poor coding, to a tenth of unity for good coding. These values are indicative and may also depend on the content.

Determining a best local octree-based structure $O_k$ for a $LOU_k$ is now detailed in accordance with an embodiment of the present principles.

In step 500, the module M5 obtains a set of N candidate octree-based structures $O_{k,n}$ for the $LOU_k$ and obtains a set of points $P_{k,n}$ for each candidate octree-based structure $O_{k,n}$. The points $P_{k,n}$ are points which are included in cubes associated with leaf nodes of a candidate octree-based structure $O_{k,n}$.

In step 510, the module M5 obtains the bit-rate $R_{k,n}$ for encoding each candidate octree-based structure $O_{k,n}$.

In step 520, the module M5 obtains points $P_{k,or}$ of the point cloud IPC which are included in the $LOU_k$.

In step 530, the module M5 obtains a distortion $D_{k,n}$ for each candidate octree-based structure $O_{k,n}$, each distortion $D_{k,n}$ takes into account the spatial distances between, on one hand, the points $P_{k,OR}$, and on the other hand, the points $P_{k,n}$.

In step 540, the module M5 calculates the Lagrangian cost $C_{k,n}$ according to equation (1) for each candidate octree-based structure $O_{k,n}$.

In step 550, the module M5 obtains the best local octree-based structure $O_k$ according to equation (2) once all the candidate octree-based structures $O_{k,n}$ have been considered.

Note that as explained above, it may then consider that the best trade-off for a $LOU_k$ is to not code the points included in it. In that case, no local octree-based structure $O_k$ is determined for this $LOU_k$.

According to an embodiment of step 500, a candidate octree-based structure $O_{k,n}$ comprises at least one leaf node and the leaf cube associated to a leaf node may (or not) include a single point.

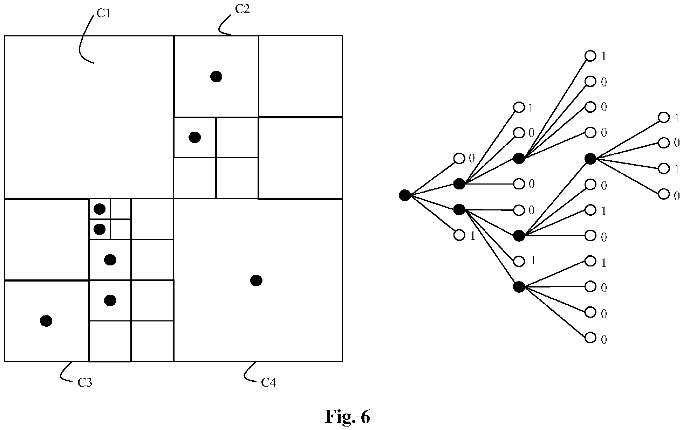

**Fig. 6** shows an illustration of an example of a candidate octree-based structure $O_{k,n}$ according to this embodiment. This figure represents an example of a quadtree-based structure that splits a square, but the reader will easily extend it to the 3D case by replacing the square by a cube ($LOU_k$).

According to this example, the cube is split into 4 sub-cubes C1, C2 C3 and C4 (depth 1). The sub-cube C1 is associated with a leaf node and does not contain any point. The sub-cube C2 is recursively split into 4 sub-cubes (depth 2). The sub-cube C3 is also recursively split and the sub-cube C4 is not split but a point, located in the center of the cube for example, is associated with it,..., etc.

On the right part of **Fig. 6** is shown an illustration of the candidate octree-based structure. A black circle indicates that a node is split. A binary flag is associated with each white circle (leaf node) to indicate if the square (a cube in the 3D case) includes (1) or not (0) a point.

According to this example, a point is located in the center of a cube because it avoids any additional information about the spatial location of that point once the cube is identified in the octree-based structure. But the present principles are not limited to this example and may extend to any other spatial location of a point in a cube.

The present principles are not limited to the candidate octree-based structure illustrated on **Fig. 6** but extend to any other octree-based structure comprising at least one leaf node whose associated leaf cube includes at least one point.

According to an embodiment of the step 510, when the second octree information data SOID indicates that a cube associated with said node is split and the second leaf node information data SLID indicates if a leaf cube of a local octree-based structure $O_k$ includes a point representative of a part of the point cloud IPC, the bit-rate $R_{k,n}$ is the sum of the numbers of the binary flags comprised in the second octree information data SOID and the second leaf node information data SLID.

According to another variant of the step 510, a first sequence of the binary flags comprised in the second octree information data SOID and a second sequence of binary flags comprised in the second leaf node information data SLID are formed and entropy-coded and the bit-rate $R_{k,n}$ is then obtained from the entropy-encoded versions of said first and second sequence.

According to a variant of the steps 520 and 530, in step 520, the module M3 obtains neighboring point $P_{k,NEI}$ which are either points of the inverse point cloud IPPC which are included in at least one neighboring Largest Coding Unit $LOU_{k,NEI}$ of the $LOU_k$, or points included in leaf cubes associated with leaf nodes of local octree-based structures previously determined for said at least one neighboring Largest Coding Unit $LOU_{k,NEI}$.

In step 530, the module M5 obtains a distortion that also takes into account the spatial distances between the points $P_{k,or}$ and the neighboring points $P_{k,NEI}$.

Mathematically speaking, the distortion $D_{k,n}$ is a metric given by:

$$D_{k,n} = d\big(P_{k,n} \cup P_{k,IP} \cup P_{k,NEI}, P_{k,OR}\big) + d\big(P_{k,OR}, P_{k,n} \cup P_{k,IP} \cup P_{k,NEI}\big).$$

The distance $d(P_{k,OR}, P_{k,n} \cup P_{k,IP} \cup P_{k,NEI})$ ensures also that each point of the point cloud IPC is approximated by points not too far, including also neighboring points included in neighboring Largest Coding Units $LOU_{k,NEI}$. It is advantageous because it avoids coding too finely points of the point cloud IPC, close to the edge of the neighboring Largest Coding Units $LOU_{k,NEI}$ that could be already well represented by points included in the neighboring Largest Coding Units $LOU_{k,NEI}$. Consequently, this saves bit-rates by coding less points, and with a small impact on the distortion.

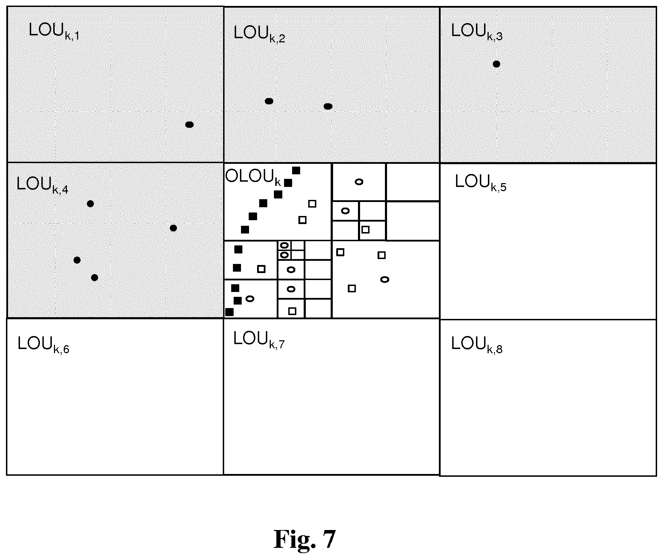

According to an embodiment of this variant, illustrated on **Fig. 7,** the Largest Coding Unit $LOU_{k,NEI}$ are defined in order to have at least one vertex, one edge or one face in common with the $LOU_k$.

**Fig. 7** shows an illustration of an example of neighboring Largest Coding Units $LOU_{k,NEI}$. This figure represents an example of a quadtree-based structure relative to the $LOU_k$ and eight neighboring $LOU_{k,1-8}$ of the $LOU_k$. The points $P_{k,OR}$ are represented by white rectangles. The points $P_{k,IP}$ are represented by black rectangles. The points $P_{k,NEI}$ are represented by black circles. The point $P_{k,n}$ are represented by white circles. It is understood that the 2D description is for illustration only. in 3D, one should consider the 26 neighboring cubes instead of the 8 neighboring squares of the 2D illustration.

According to this example, the points $P_{k,NEI}$ are the points included in four $LOU_{k,1-4}$, i.e. points that are either included in cubes associated with leaf nodes of local octree-based structures associated with these four $LOU_{k,1-4}$ (step 820) and/or points of the inverse-projected colored point cloud IPPC which are included in said $LOU_{k,1-4}$.

The geometry of the point cloud IPC is approximated by said at least one depth image obtained by projecting the point cloud IPC onto surfaces $F_{i,j}$ associated with volumes $Cj$ and by the octree-based structures IO and $O_k$.

The colors of the points of the point cloud IPC may be approximated as described hereinbelow.

According to a variant of the method, in step 100, the module M1 obtains also a texture image $(TI_{i,j})$ per depth image $(DI_{i,j})$ by projecting, onto a surface $F_{i,j}$ associated with a volume $C_j$ of the structure of projection, the points of the point cloud IPC which are included in said volume $C_j$.

A projection projects points of the point cloud IPC included in a volume $C_j$ onto a surface $F_{i,j}$ associated with it to create a depth image $DI_{i,j}$ and, optionally, a texture image $TI_{i,j}$.

A projection of the points of the point cloud IPC onto a surface associated with a volume $C_j$ may be obtained in diverse ways, for example by implementing any one of the following methods:

- a parametric linear perspective projection of the points of the point cloud IPC, which are included in the volume $C_j$,

onto a plane $F_{i,j}$ associated with a point of view, the parameters representative of the linear perspective projection comprising the location of the virtual camera, the spatial sampling step and the field of view in the 2 dimensions;

- a parametric orthographic projection of the points of the point cloud IPC, which are included in the volume $C_j$, onto a surface $F_{ij}$, the parameters representative of the orthographic projection comprising the geometry (shape, size and orientation) of the projecting surface $F_{i,j}$ and spatial sampling step;
- LLE (Locally-Linear Embedding) that corresponds to a mathematical operation of dimension reduction, here applied to convert/transform from 3D to 2D, parameters representative of the LLE comprising the transformation coefficients.

Each surface $F_{i,j}$ may have advantageously a rectangular shape to ease the encoding process 110 by the module ENC1 on the **Fig. 1a-b.**

The projection process is not limited to the above described process that is provided as an exemplary embodiment only.

According to a variant of the preferred embodiment of step100, the module M1 obtains also a texture image $TI_{i,j}$ per depth image $DI_{i,j}$ by projecting, onto a face $F_{i,j}$ of a cube $C_j$ of the octree-based structure of projection, the points of the point cloud IPC which are included in said cube $C_j$.

The texture images $TI_{i,j}$ are an approximation of the colors of points of the point cloud IPC.

According to an embodiment, the projection of points of the point cloud IPC onto a face of a cube is an orthogonal projection.

An orthogonal projection projects points of the point cloud IPC included in a cube $C_j$ onto one of its face $F_{i,j}$ to create a depth image $DI_{i,j}$ and, optionally, a texture image $TI_{i,j}$. The resolution of the created depth images may be identical to the cube resolution, for instance points in a 16x16x16 cube are projected on a 16x16 pixel image. By permutation of the axes, one may assume without loss of generality that a face is parallel to the XY plane. Consequently, the depth (i.e. the distance to the face) of a point is obtained by the component Z of the position of the point when the depth value Zface of the face equals 0 or by the distance between the component Z and the depth value Zface of the face.

At the start of the projection process, the texture image may have a uniform predetermined color (grey for example) and the depth image may have a uniform predetermined depth value (a negative value -D for instance). A loop on all points included in the cube is performed. For each point at position (X,Y,Z), if the distance Z - Zface of the point to the face is strictly lower than the depth value of the collocated (in the sense of same X and same Y) pixel in the depth image, then said depth value is replaced by Z - Zface and the color of the collocated pixel the texture image is replaced by the color of said point. After the loop is performed on all points, all depth values of the depth image may be shifted by an offset +D. Practically, the value Zface, the origin for X and Y for the face, as well as the cube position relatively to the face, are obtained from the projection information data.

The offset D is used to discriminate pixels of the images that have been projected (depth is strictly positive) or not (depth is zero).

According to an embodiment of the step 110, the encoder ENC1 is a HEVC-like encoder (AVC, H264, H265, etc.).

According to an embodiment of step 110, the encoder ENC1 encodes a depth image by taking into account the texture image associated with said depth image.

According to an embodiment of step 110, the encoder ENC1 is 3D-HEVC compliant (see Annex J of the HEVC specification on coding tools dedicated to the depth). Such an encoder can natively code jointly a texture and its associated depth, with a claimed gain of about 50% in term of compression performance of the depth video. The texture image is backward compatible with HEVC and, consequently, is compressed with the same performance as with the classical HEVC main profile.

According to a variant of step 120, the module M2 uses the encoder ENC1 to encode and decode said at least one depth image ($DI_{i,j}$) and said at least one texture image $TI_{i,j}$ and obtains the inverse-projected point cloud IPPC by decoding said at least one encoded depth image $DI_{i,j}$ and said at least one encoded texture image $TI_{i,j}$ and by inverse-projecting said at least one decoded depth image $DI_{i,j}$ and said at least one decoded texture image $TI_{i,j}$.

The inverse-projected point cloud IPPC represents then an approximation of the geometry and the colors of the point cloud IPC.

When the projection is a projection on the surface $F_{i,j}$ associated with a volume $C_j$, the inverse projection may correspond to the inverse operations of the hereinabove described projections methods, for example a parametric linear perspective inverse projection, a parametric orthographic inverse projection and/or an inverse Locally-Linear Embedding. The inverse projection performs the inverse projection using the depth information associated with the pixels of the depth image $DI_{i,j}$ to obtain the points part of the inverse-projected point cloud IPPC belonging to the volume $C_j$. The color information associated with the pixels of the texture image $TI_{i,j}$ is assigned to said points to obtain the colors of the point of the inverse-projected point cloud IPPC.

When the projection is an orthogonal projection on the face $F_{i,j}$ of a cube $C_j$, the orthogonal inverse projection, from the face of the cube, determines inverse projected 3D points in the cube from texture and depth images. The resolution of the face may be identical to the cube resolution, for instance points in a 16x16x16 cube are projected on a 16x16-pixel image. By permutation of the axes, one may assume without loss of generality that the face is parallel to the XY plane. Consequently, the depth (i.e. the distance to the face) of a point may be representative of the component Z of the position of inverse projected point. The face is then located at the value Zface of the Z coordinate, and the cube is located at Z greater than Zface. Practically, the value Zface, the origin for X and Y for the face, as well as the cube position relatively to the face, are obtained from the projection information data.

A loop on all pixels of the depth image is performed. For each pixel at position (X,Y) and depth value V, if the value V is strictly positive, then an inverse projected 3D points may be obtained at location (X,Y, Zface +V - D) and the color of the pixel at position (X,Y) in the texture image may be associated to said points. The value D may be the same positive offset as used in the projection process.

The orthogonal inverse projection process is not limited to the above described process that is provided as an exemplary embodiment only.

By orthogonally inverse projecting several decoded texture and depth images, it may happen that two or more inverse projected 3D points belong to exactly the same position of the 3D space. In this case, said points are replaced by only one point, at said position, whose color is the average color taken on all said inverse projected 3D points.

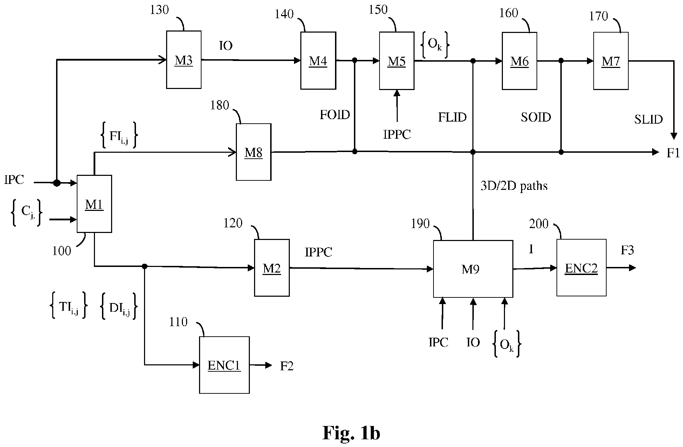

According to an embodiment of the method, illustrated in **Fig. 1b,** in an optional step 190, a module M9 obtains an image I from the colors of the points located in leaf cubes associated with leaf nodes of the local octree-based structure $O_k$. Said points are named leaf points in the following.

Colors of said leaf points are representative of the colors of points of the point cloud IPC. For example, those colors may be obtained by taking the colors of the at least one closest (relatively to said leaf point) point of the point cloud IPC.

In an optional step 200, an encoder ENC2 encodes the image I.

The encoded image I may be stored and/or transmitted in a bitstream F3.

These bitstreams F1, F2 and optionally F3 may be carried by either a single or multiple signals.

According to an embodiment of step 200, the encoder ENC2 is compliant with a legacy encoder such as

- JPEG, specification ISO/CEI 10918-1 UIT-T Recommendation T.81, https://www.itu.int/rec/T-REC-T.81/en ,
- AVC, also named MPEG-4 AVC or h264. Specified in both UIT-T H.264 and ISO/CEI MPEG-4 Part 10 (ISO/CEI 14496-10), http://www.itu.int/rec/T-REC-H.264/en,
- or HEVC (its specification is found at the ITU website, T recommendation, H series, h265, http://www.itu.int/rec/T-REC-H.265-201612-I/en)

for example.

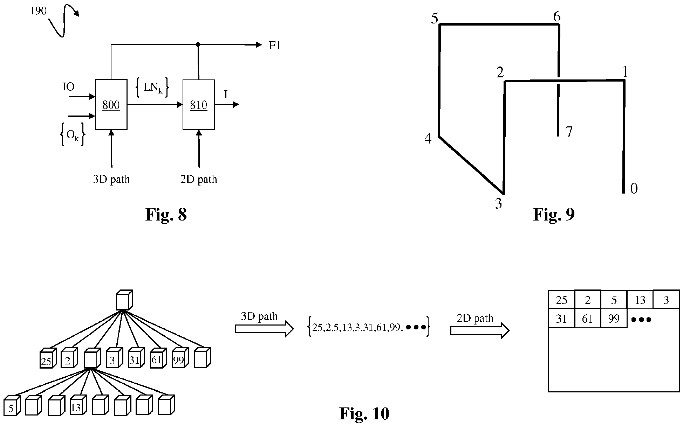

**Fig. 8** shows schematically a diagram of the sub-steps of step 190 in accordance with an example of the present principles.

In step 800, the module M9 obtains a global octree-based structure GO by replacing at least one leaf node of the octree-based structure IO by a local octree-based structure $O_k$.

The module M9 then orders the leaf points, associated with the leaf cubes of the octree-based structures $O_k$, by scanning the leaf nodes of the global octree-based structure GO according to a specific 3D path.

For example, as illustrated in **Fig. 9,** a number is assigned to each leaf node of the octree-based structure GO and the leaf cubes that include leaf points are ordered according to their assigned numbers. In **Fig. 10,** only the number of the leaf node associated with a leaf cube that includes a point are shown (25, 2,...).

The ordered leaf cubes, i.e. the ordered leaf points, may form a list of ordered numbers as shown in **Fig. 10.** Each number referring to a specific leaf cube that include a point representative of at least a part of the point cloud IPC.

In step 810, the module M9 assigns the color of each ordered leaf point to a pixel of an image I according to a specific 2D path.

As illustrated in **Fig. 10,** the 2D path may be the raster order usually in image processing. Following such a 2D path, the color of the first point (25) of the list of ordered points is assigned to the top-left pixel of the image I, the color of the second point (2) of the list of ordered points is assigned to the adjacent pixel on the same row, etc.

The numbers of rows and columns of the image are defined beforehand. Advantageously, it may be a multiple of the size of a coding unit (or block) of the image or video encoder ENC2. For instance, when using HEVC, it is preferably a multiple of 64 for both numbers of rows and columns. The number of pixels of the image I should be at least the number of octree-based points to ensure that the colors of all points can be mapped onto the image I. For example, one million of octree-based of points may be mapped onto a 1024x1024 pixel image I.

The specific 3D path and/or the specific 2D path may be stored and/or transmitted in a bitstream F1.

According to an embodiment, an information data, such as a set of bits, is stored and/or transmitted to represent the specific 3D and/or 2D path. Said information data may represents an index of a table listing several candidate 3D and/or 2D paths.

According to an embodiment of the step 800, the module M9 assigns a specific number $LN_k$ to each node of the global octree-based structure GO to identify uniquely each leaf point included in a leaf cube associated with a leaf node.

For example, the specific number $LN_k$ assigned to a child node is given by:

$$LN_k = 8*PN_k + n_k \qquad (3)$$

where $PN_k$ is the specific number assigned to the parent node of a child node and $n_k$ is a local number assigned to the child node.

According to an embodiment of the step 800, the specific 3D path is a 3D Hilbert path defined as a discrete approximation of a 3D Hilbert curve as illustrated on **Fig. 9.**

On **Fig. 9,** the eight children of a parent node of the octree-based structure O are represented as eight vertices numbered 0 to 7 that are connected symbolically by segments. In other words, the cube associated with a parent node is split and the eight sub-cubes are associated with vertices. Thus, following the 3D Hilbert path for a given depth level of the octree-based structure O is defined by considering the vertex 0 in first, next the vertex 1, ..., and finally the vertex 7.

Consequently, the 3D Hilbert path allows to scan the children of a parent node of the octree-based structure O according to a specific ordering.

The 3D Hilbert path is a recursive path and the specific ordering illustrated in **Fig. 9** shall be reproduced at any depth level of the octree-based structure O.

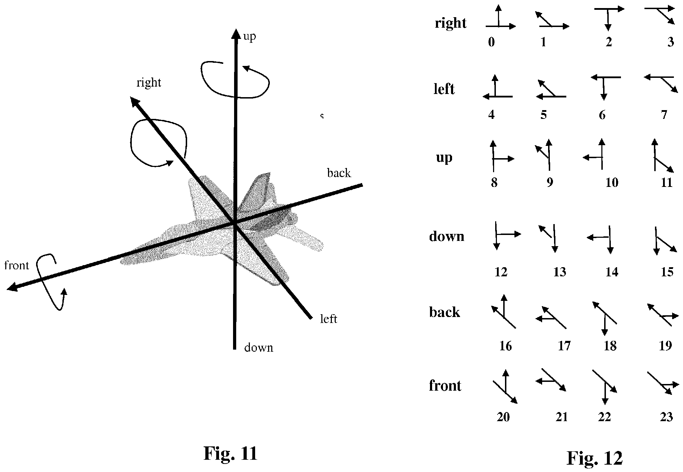

According to an embodiment of the step 800, the specific 3D path is implemented as an orientation system whose characterization uses the notion of an "aircraft" moving along segments that connect the eight vertices as illustrated in **Fig. 11.**

The "aircraft" may move along three axes (front/back, up/down, right/left) and may rotate about each axe with an angle of 0, 90, 180 or 270 degrees.

Therefore, a set $\Omega$ of 24 orientations of the "aircraft" is defined as illustrated in **Fig. 12,** each orientation being defined by a direction (front/back, up/down, right/left) and a rotation angle (0, 90, 180 or 270 degrees) and labelled by a number 0-23.

For example, the orientation $\Omega=16$ corresponds to the direction "back" combined with a rotation angle of 0 degree and the orientation $\Omega=10$ corresponds to the direction "up" combined with a rotation angle of 270 degrees.

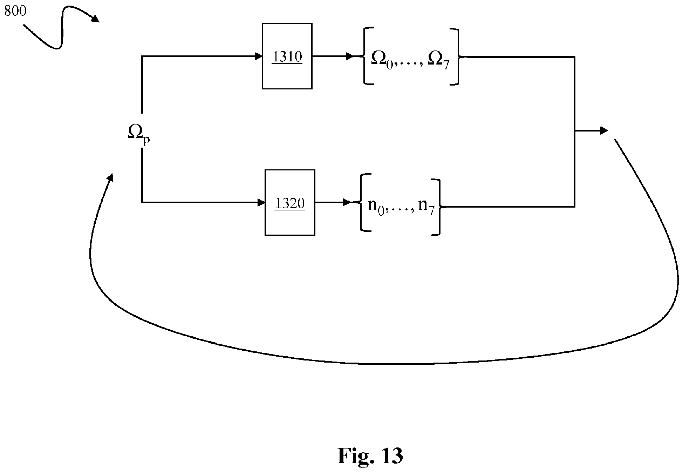

According to an embodiment of the step 800, illustrated on **Fig. 13,** the module M9 assigns an orientation $\{\Omega_0, ..., \Omega_7\}$ (step 1310) and a local number $\{n_0, ..., n_7\}$ (step 1320) to each of the eight children nodes according to the orientation $\Omega_p$ previously assigned to the parent node and according to a specific child node numbering order. This specific child node numbering order is defined once for all on all the nodes and is independent on the orientation $\Omega_p$.

The steps 1310 and 1320 are recursive to assign an orientation ($\Omega_m$) and a local number ($n_m$) to each node of the octree-based structure GO according to a 3D Hilbert path.

A specific number $LN_k$ is then assigned to each node of the octree-based structure GO (eq. 3) and the leaf cubes (associated with leaf nodes of the octree-based structure GO) that include points of the colored point cloud IPC are then ordered according to these specific numbers $LN_k$.

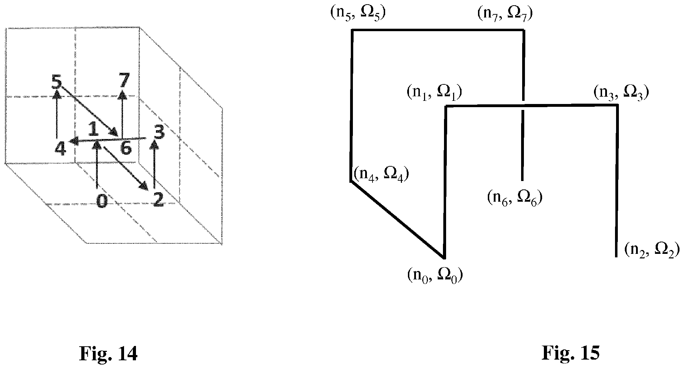

For example, the pairs ($\Omega_m$, $n_m$) are assigned to each vertex of a leaf cube as illustrated in **Fig. 15** when the specific node numbering order, illustrated on **Fig. 14,** is used.

The present principles are not limited to any specific node numbering order but extends to any node numbering order.

The present principles are not limited to the 3D Hilbert path and other specific 3D path may be used following or not a node numbering order similar to the node numbering detailed above for the 3D Hilbert path.

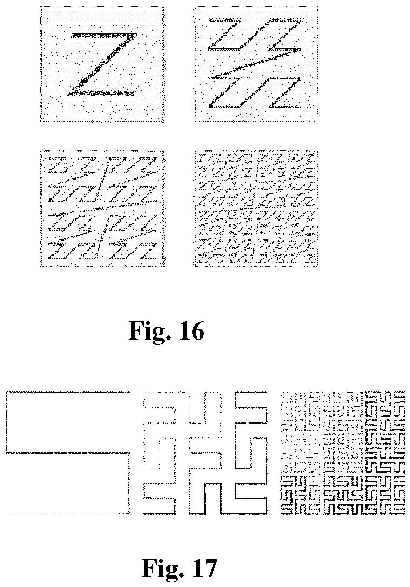

**Figs. 16** and **17** show other examples of specific 2D paths such as the Z-scan curve **(Fig. 16)** or the Peano curve (**Fig. 17**). The reader will understand that these specific 2D paths may also extend to the 3D case.

Following the step 800, the leaf points included in leaf cubes of leaf nodes of the octree-based structure GO are ordered according to the specific numbers $LN_k$.

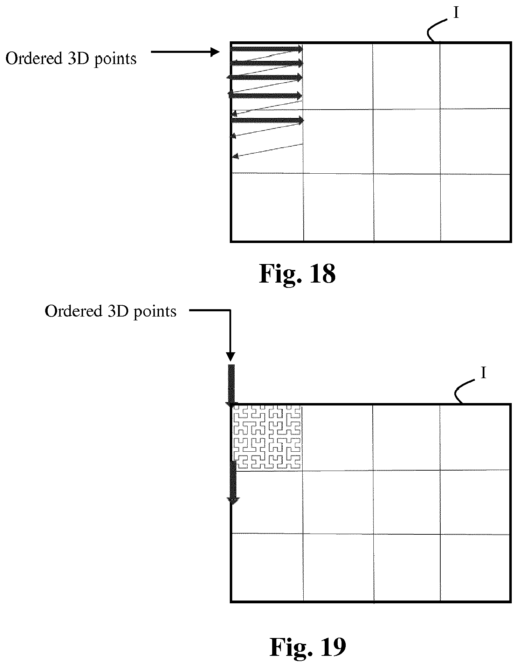

According to an embodiment of step 810, illustrated in **Fig. 18,** the color of each ordered leaf point is assigned to a pixel of the image I according to a raster scan.

According to an embodiment of step 810, the color of each ordered leaf point is assigned to a pixel of the image I according to a discrete approximation of a continuous 2D Hilbert curve as illustrated in **Fig. 19.**

Both the continuous Hilbert curve and its discrete approximations are useful because they give a 3D to 1D (step 800) or 1D to 2D (step 810) space mapping that fairly well preserves locality. Basically this means that if (x,y) are the coordinates of a 2D point within a unit square, and d is the distance along the 2D curve when it reaches that 2D point, then 2D points that have nearby d values will also have nearby (x,y) values. The converse cannot always be true. There will sometimes be points where the (x,y) coordinates are close but their d values are far apart. This is also valid in a 3D space with points of coordinates (x,y,z) in an unit cube. Preserving locality is advantageous because it allows to preserve color (texture) spatial correlation when performing the scanning of points from the 3D geometry to the image I. Compression capability of 2D image/video codecs largely come from texture spatial correlation. Consequently, not preserving this correlation would lead to very poor compression of the image I.

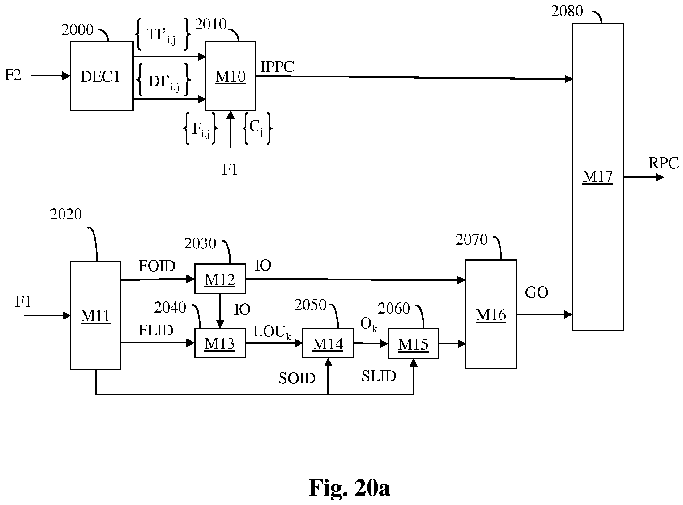

**Fig. 20a** shows schematically a diagram of the steps of the method for decoding, from at least one bitstream, a point cloud representing a 3D object in accordance with an example of the present principles.

In step 2000, a decoder DEC1 decodes from a bitstream F2, at least one depth image representative of the spatial locations of at least a part of a point cloud RPC to be decoded.

In step 2010, a module M10 obtains an inverse-projected point cloud IPPC by inverse-projecting said at least one decoded depth image $DI'_{i,j}$, said inverse-projection being driven by projection information data representative of at least one surfaces $F_{i,j}$ associated with at least one volume $C_j$ of a structure of projection.

According to a preferred embodiment of step 2010, a volume $C_j$ is a cube, a surface is a face of that cube and the structure of projection is an octree-based structure of projection.

Said inverse projection is similar to the process of step 120.

According to a variant of 2010, the module M10 decodes projection information data representative of the set of said at least one surface $F_{i,j}$. Projection information data drive the inverse projection from at least one surface to obtain an inverse-projected point cloud IPPC.

In a variant of step 2010, the structure of projection may be known beforehand by a decoder.

In a variant of step 2010, the module M10 also decodes projection information data representative of the structure of projection (a set of volumes $C_j$ and surfaces $F_{i,j}$ associated with the volumes).

In another variant of step 2010, the module M10 also decodes projection information data representative of the structure of projection which is an octree-based structure of projection (a set of cubes $C_j$ and faces $F_{i,j}$ of the cubes).

In step 2020, a module M11 decodes, from the bitstream F1, the first octree information data FOID.

In step 2030, a module M12 obtains an octree-based structure IO from the first octree information data FOID.

In step 2020, the module M11 decodes, from the bitstream F1, a leaf node information data FLID, and in step 2040, a module M13 determines if a $LOU_k$ associated with a leaf node of the octree-based structure IO is associated with a local octree-based structure $O_k$ from said first leaf node information data FLID.

If a first leaf node information data FLID indicates that a local octree-based structure $O_k$ has been associated with a $LOU_k$, in step 2020, the module M11 decodes, from the bitstream F1, the octree information data SOID and leaf node information data SLID, in step 2050 a module M14 obtains a local octree-based structure $O_k$ for said $LOU_k$ from said octree information data SOID, and in step 2060, a module M15 determines if a leaf cube of said local octree-based structure $O_k$ includes an leaf point representative of a part of the point cloud IPC from said leaf node information data SLID. In this case, in step 2060, the module M 15 adds said leaf point, preferably located at the center of the leaf cube it belongs to, to said local octree-based structure $O_k$.

In step 2070, a module M16 obtains a global octree-based structure GO by replacing at least one leaf node of the octree-based structure IO by a local octree-based structure $O_k$.

The global octree-based structure GO is thus formed by all leaf points obtained from the leaf cubes of all local octree-based structure $O_k$ attached to the $LOU_k$.

In step 2080, a module M17 obtains the decoded point cloud RPC by fusing said inverse-projected point cloud IPPC and the global octree-based structure GO.

The spatial locations of the points of the decoded point cloud RPC are an approximation of the geometry of the point cloud IPC.

According to an embodiment, the octree information data FOID, the leaf node information data FLID, the octree information data SOID and/or the leaf node information data SLID may be obtained by entropy-decoding the bitstream F1. The entropy-decoding may be compliant with a CABAC-like coding.

According to a variant of the method, in step 2000, the decoder DEC1 decodes from a bitstream F2, a texture image $TI_{i,j}$ per depth image $DI_{i,j}$. At least one pair of decoded texture $TI'_{i,j}$ and decoded depth $DI'_{i,j}$ images is then formed.

According to an embodiment of the step 2000, the decoder DEC1 is a HEVC-like decoder (AVC, H264, H265, etc.).

According to an embodiment of step 2000, the decoder DEC1 decodes a depth image by taking into account the texture image associated with said depth image.

According to an embodiment of step 2000, the decoder DEC1 is 3D-HEVC compliant.

According to a variant of step 2010, the module M10 obtains an inverse-projected point cloud IPPC by inverse-projecting said at least one decoded depth image $DI'_{i,j}$, and said at least one decoded texture image $TI_{i,j}$.

The spatial locations of the points of the decoded point cloud RPC are an approximation of the geometry of the point cloud IPC, and the colors of the points of the inverse-projected point cloud approximate the colors of some points of the point cloud IPC. The colors of the other points of the decoded point cloud RPC may be obtained by interpolation of the colors of the points of the inverse-projected point cloud.

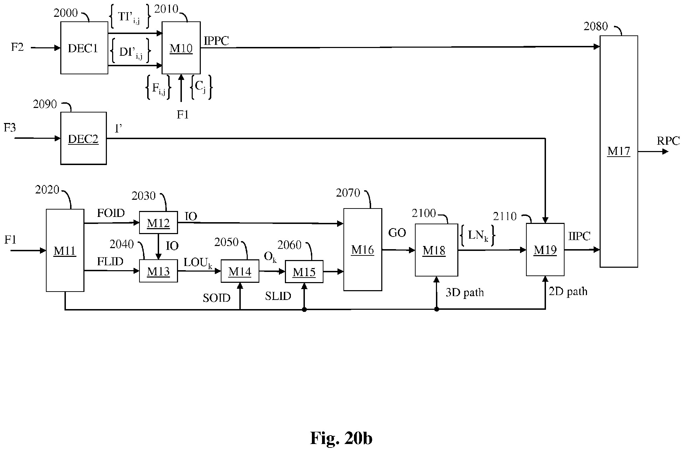

According to an embodiment of the method, illustrated in **Fig. 20b,** in step 2090 (optional), a decoder DEC2 decodes an encoded image I from a bitstream F3, to obtain a decoded image I'.

According to an embodiment of step 2090, the decoder DEC2 is compliant with a legacy decoder such as JPEG, AVC or HEVC for example.

In step 2100, a module M18 orders the leaf nodes of the global octree-based structure GO by scanning the leaf nodes of the global octree-based structure GO according to a specific 3D path.

The ordering of step 2100 is similar to the ordering of step 800 and may be based on a number assigned to each leaf node of the global octree-based structure GO (**Fig. 8**).

A list of ordered leaf cubes that includes leaf points representative of at least a part of the point cloud IPC is then obtained.

In step 2110, a module M19 obtains the color of a point of a decoded point cloud IIPC by scanning the decoded image I' according to a specific 2D path and the ordered leaf cubes associated with the leaf nodes of the global octree-based structure GO.

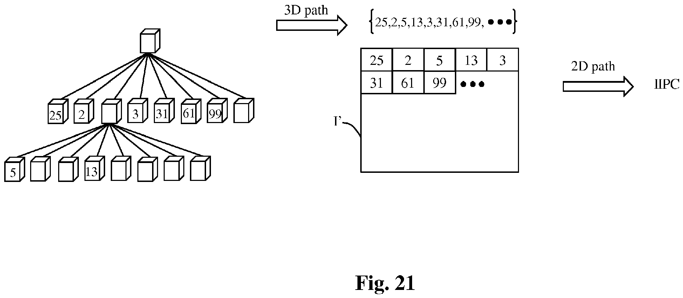

For example, as illustrated in Fig. **21,** when the specific 2D path is a raster order, the color of the top-left pixel of the decoded image I' is the color of the first leaf cube (point) (25) of the list of ordered leaf cubes, the color of the adjacent pixel is the color of the second point (2) of the list of ordered leaf cubes, etc.

According to an embodiment of step 2080, the module M 17 obtains the decoded point cloud RPC by fusing said inverse-projected point cloud IPPC and said decoded point cloud IIPC.

It may happen that one point of the inverse-projected point cloud IPPC and one other point of the global octree-based structure GO belong to exactly the same position of the 3D space. In this case, these two points are replaced by only one point, at said position, whose color is the average color of the two points.

The geometry and colors of the point cloud IPC are thus approximated by said decoded point cloud RPC.

According to embodiment of step 2020, the module M11 decodes, from the bitstream F1, the 3D and/or 2D path.

The present principles have been described by considering leaf cubes ($LOU_k$) associated with the leaf nodes of an octree-based structure (IO).

According to an embodiment of the encoding and decoding methods, a cube C encompassing at least one point of the point cloud IPC is considered rather than a $LOU_k$.

The point cloud IPC is then encoded as follows:

The steps 100-120 remain unchanged and the steps 130 and 140 are removed.

In step 150, the module M5 determines if a local octree-based structure $O_k$ is associated with said encompassing cube by optimizing a trade-off between a bit-rate $R_{k,n}$ for encoding a candidate octree-based structure $O_{k,n}$ approximating the geometry of points $P_{k,or}$ of the point cloud which are included in said encompassing cube, and a distortion $D_{k,n}$ taking into account spatial distances between, on one hand, said points $P_{k,or}$ of the point cloud which are included in said encompassing cube, and on the other hand, points $P_{k,n}$ which are included in leaf cubes associated with leaf nodes of the candidate octree-based structure $O_{k,n}$ together with points $P_{k,IP}$ of the inverse-projected point cloud IPPC which are included in said encompassing cube.

In step 150, the module M5 encodes a leaf node information data FLID indicating if a local octree-based structure $O_k$ has been determined for said encompassing cube;

- if said leaf node information data FLID indicates that a local octree-based structure $O_k$ has been determined for said encompassing cube,
- in step 160, an octree information data SOID representative of said determined local octree-based structure $O_k$ is encoded; and
- in step 170, a leaf node information data SLID, indicating if a leaf cube of said local octree-based structure $O_k$ includes a point representative of a part of the point cloud, is encoded.

According to an embodiment of the decoding method, an encompassing cube, including at least one point representing at least a part of the point cloud to be decoded, is considered rather than a $LOU_k$. The global octree-based structure GO may then be equal to a single local octree-based structure $O_k$ (step 2070).

The point cloud IPC is then decoded as follows:

The steps 2000 and 2010 are cancelled.

In step 2020, a leaf node information data FLID, indicating if a local octree-based structure $O_k$ has been determined for said encompassing cube, is decoded from a bitstream F1.

If said leaf node information data FLID indicates that a local octree-based structure $O_k$ has been determined for said encompassing cube,

- in step 2020, an octree information data SOID representative of said determined local octree-based structure $O_k$, and a leaf node information data SLID, indicating if a leaf cube of said local octree-based structure $O_k$ includes a point representative of a part of the point cloud, are decoded from the bitstream F1;
- in step 2050, a local octree-based structure $O_k$ is obtained for said encompassing cube from said octree information data SOID;
- in step 2060; one determines if a leaf cube of said local octree-based structure $O_k$ includes a point of the point cloud to be decoded from said leaf node information data SLID, and in this case, adds (2060) a leaf point to the leaf cube of said local octree-based structure Ok.

In step 2080, the decoded point cloud is obtained by fusing said inverse-projected point cloud IPPC and said local octree-based structure $O_k$.

In step 2100, the leaf nodes of said local octree-based structure $O_k$ are ordered by scanning the leaf nodes of the global octree-based structure GO according to a specific 3D path.

In step 2110, the color of a point of a decoded point cloud IIPC is obtained by scanning the decoded image I' according to a specific 2D path and the ordered leaf cubes associated with the leaf nodes of said local octree-based structure $O_k$.On **Fig. 1-21,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

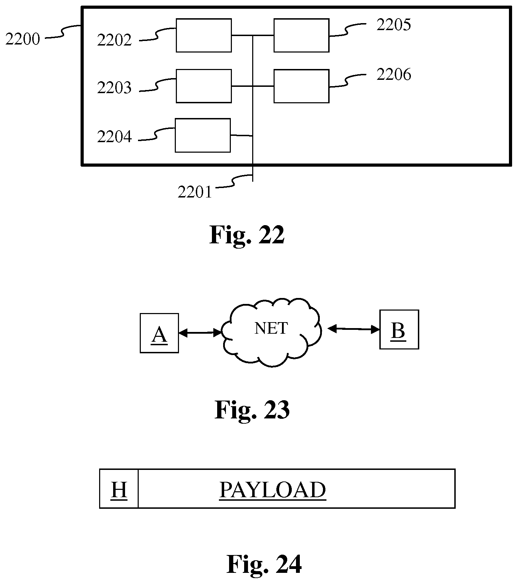

**Fig. 22** represents an exemplary architecture of a device 2200 which may be configured to implement a method described in relation with **Fig. 1-21.**

Device 2200 comprises following elements that are linked together by a data and address bus 2201:

- a microprocessor 2202 (or CPU), which is, for example, a DSP (or Digital Signal Processor);
- a ROM (or Read Only Memory) 2203;
- a RAM (or Random Access Memory) 2204;
- an I/O interface 2205 for reception of data to transmit, from an application; and
- a battery 2206.

In accordance with an example, the battery 2206 is external to the device. In each of mentioned memory, the word « register » used in the specification can correspond to area of small capacity (some bits) or to very large area (e.g. a whole program or large amount of received or decoded data). The ROM 2203 comprises at least a program and parameters. The ROM 2203 may store algorithms and instructions to perform techniques in accordance with present principles. When switched on, the CPU 2202 uploads the program in the RAM and executes the corresponding instructions.

RAM 2204 comprises, in a register, the program executed by the CPU 2202 and uploaded after switch on of the device 2200, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the point cloud IPC is obtained from a source. For example, the source belongs to a set comprising:

- a local memory (2203 or 2204), e.g. a video memory or a RAM (or Random Access Memory), a flash memory, a ROM (or Read Only Memory), a hard disk ;
- a storage interface (2205), e.g. an interface with a mass storage, a RAM, a flash memory, a ROM, an optical disc or a magnetic support;
- a communication interface (2205), e.g. a wireline interface (for example a bus interface, a wide area network interface, a local area network interface) or a wireless interface (such as a IEEE 802.11 interface or a Bluetooth® interface); and

- an image capturing circuit (e.g. a sensor such as, for example, a CCD (or Charge-Coupled Device) or CMOS (or Complementary Metal-Oxide-Semiconductor)).

In accordance with an example of the decoding or a decoder, the decoded colored point cloud CPC is sent to a destination; specifically, the destination belongs to a set comprising:

- a local memory (2203 or 2204), e.g. a video memory or a RAM, a flash memory, a hard disk ;
- a storage interface (2205), e.g. an interface with a mass storage, a RAM, a flash memory, a ROM, an optical disc or a magnetic support;
- a communication interface (2205), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples of encoding or encoder, the bitstream F1-F3 are sent to a destination. As an example, at least one of bitstreams F1-F3 is stored in a local or remote memory, e.g. a video memory (2204) or a RAM (2204), a hard disk (2203). In a variant, at least one of bitstreams F1-F3 is sent to a storage interface (2205), e.g. an interface with a mass storage, a flash memory, ROM, an optical disc or a magnetic support and/or transmitted over a communication interface (2205), e.g. an interface to a point to point link, a communication bus, a point to multipoint link or a broadcast network.

In accordance with examples of decoding or decoder, at least one of bitstreams F1-F3 is obtained from a source. Exemplarily, a bitstream is read from a local memory, e.g. a video memory (2204), a RAM (2204), a ROM (2203), a flash memory (2203) or a hard disk (2203). In a variant, the bitstream is received from a storage interface (2205), e.g. an interface with a mass storage, a RAM, a ROM, a flash memory, an optical disc or a magnetic support and/or received from a communication interface (2205), e.g. an interface to a point to point link, a bus, a point to multipoint link or a broadcast network.

In accordance with examples, device 2200 being configured to implement an encoding method described in relation with **Fig. 1-19,** belongs to a set comprising:

- a mobile device;
- a smartphone or a TV set with 3D capture capability
- a communication device;
- a game device ;
- a tablet (or tablet computer);
- a laptop ;
- a still image camera;
- a video camera ;
- an encoding chip;
- a still image server; and
- a video server (e.g. a broadcast server, a video-on-demand server or a web server).

In accordance with examples, device 2000 being configured to implement a decoding method described in relation with **Figs. 20-21,** belongs to a set comprising:

- a mobile device;
- a Head Mounted Display (HMD)
- (mixed reality) smartglasses
- an holographic device
- a communication device;
- a game device;
- a set top box;
- a TV set;
- a tablet (or tablet computer);
- a laptop ;
- a display
- a stereoscopic display and

- a decoding chip.

According to an example of the present principles, illustrated in **Fig. 23,** in a transmission context between two remote devices A and B over a communication network NET, the device A comprises a processor in relation with memory RAM and ROM which are configured to implement a method for encoding a point cloud as described in relation with the **Figs. 1-19** and the device B comprises a processor in relation with memory RAM and ROM which are configured to implement a method for decoding as described in relation with **Figs. 20-21.**

In accordance with an example, the network is a broadcast network, adapted to broadcast encoded colored point clouds from device A to decoding devices including the device B.

A signal, intended to be transmitted by the device A, carries at least one of bitstreams F1-F3.

This signal may thus carry on at least one depth image $DI_{i,j}$ and, optionally, a texture image $TI_{i,j}$ associated with each depth image, obtained by projecting points of a point cloud IPC onto a face $F_{i,j}$ of an octree-based structure of projection, and projection information data representative of the faces and optionally representative of the octree-based structure of projection.

The signal may carry a first octree information data FOID representative of the octree-based structure IO,

The signal may also carry, for each $LOU_k$, associated with the leaf nodes of said octree-based structure IO, a first leaf node information data FLID indicating if a local octree-based structure $O_k$ has been determined for said $LOU_k$.

The signal may also carry a second octree information data SOID representative of a local octree-based structure $O_k$, and a second leaf node information data SLID indicating if a leaf cube of said local octree-based structure $O_k$ includes a point representative of a part of the point cloud IPC.

The signal may also carry information data representative of a 2D and/or 3D path.

The signal may also carry the encoded image I.

**Fig. 24** shows an example of the syntax of such a signal when the data are transmitted over a packet-based transmission protocol. Each transmitted packet P comprises a header H and a payload PAYLOAD.

According to embodiments, the payload PAYLOAD may comprise at least one of the following elements:

- bits representative of at least one pair of one texture image $TI_{i,j}$ and one depth image $DI_{i,j}$;
- at least one binary flag representative of the first octree information data FOID;
- at least one binary flag representative of the second octree information data SOID;
- at least one bit representative of a maximum depth of the cube splitting;
- at least one binary flag representative of the first leaf node information data FLID;
- at least one binary flag representative of the second leaf node information data SLID;
- bits representative of an encoded image I.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for encoding a point cloud (IPC) representing a 3D object comprising:

   a) encoding (110) at least one depth image ($\{DI_{i,j}\}$) obtained (100) by projecting the points of the point cloud onto at least one surface ($F_{i,j}$);
   b) obtaining (120) an inverse-projected point cloud (IPPC) by inverse-projecting said at least one depth image ($DI_{i,j}$);
   c) determining (150) if a local octree-based structure ($O_k$) is associated with an encompassing cube including at least one point of the point cloud (IPC) by optimizing a trade-off between a bit-rate ($R_{k,n}$) for encoding a candidate octree-based structure ($O_{k,n}$) approximating the geometry of points ($P_{k,or}$) of the point cloud which are included in said encompassing cube, and a distortion ($D_{k,n}$) taking into account spatial distances between, on one hand, said points ($P_{k,or}$) of the point cloud which are included in said encompassing cube, and on the other hand, points ($P_{k,n}$) which are included in leaf cubes associated with leaf nodes of the candidate octree-based structure ($O_{k,n}$) together with points ($P_{k,IP}$) of said inverse-projected point cloud (IPPC) which are included in said encompassing cube;
   d) encoding (150) a first leaf node information data (FLID) indicating if a local octree-based structure ($O_k$) has been determined for said encompassing cube;
   e) if said first leaf node information data (FLID) indicates that a local octree-based structure ($O_k$) has been determined for said encompassing cube,

      - encoding (160), an octree information data (SOID) representative of said determined local octree-based structure ($O_k$); and
      - encoding (170) a second leaf node information data (SLID) indicating if a leaf cube of said local octree-based structure ($O_k$) includes a point representative of a part of the point cloud.

2. A device for encoding a point cloud (IPC) representing a 3D object comprising means for:

   a) encoding at least one depth image ($\{DI_{i,j}\}$) obtained (100) by projecting the points of the point cloud onto at least one surface ($F_{i,j}$);
   b) obtaining an inverse-projected point cloud (IPPC) by inverse-projecting said at least one depth image ($DI_{i,j}$);
   c) determining if a local octree-based structure ($O_k$) is associated with an encompassing cube including at least one point of the point cloud (IPC) by optimizing a trade-off between a bit-rate ($R_{k,n}$) for encoding a candidate octree-based structure ($O_{k,n}$) approximating the geometry of points ($P_{k,or}$) of the point cloud which are included in said encompassing cube, and a distortion ($D_{k,n}$) taking into account spatial distances between, on one hand, said points ($P_{k,or}$) of the point cloud which are included in said encompassing cube, and on the other hand, points ($P_{k,n}$) which are included in leaf cubes associated with leaf nodes of the candidate octree-based structure ($O_{k,n}$) together with points ($P_{k,IP}$) of said inverse-projected point cloud (IPPC) which are included in said encompassing cube;

d) encoding a first leaf node information data (FLID) indicating if a local octree-based structure ($O_k$) has been determined for said encompassing cube;

e) if said first leaf node information data (FLID) indicates that a local octree-based structure ($O_k$) has been determined for said encompassing cube,

- encoding an octree information data (SOID) representative of said determined local octree-based structure ($O_k$); and
- encoding a second leaf node information data (SLID) indicating if a leaf cube of said local octree-based structure ($O_k$) includes a point representative of a part of the point cloud.

3. The method of claim 1 or the device of claim 2, wherein a surface ($F_{i,j}$) is associated with a volume ($C_j$) of a structure of projection.

4. The method of one of the claims 1 or 3 or a device of one of the claims 2 or 3, wherein said projection and inverse-projection are driven by projection information data representative of said at least one surface ($F_{i,j}$).

5. The method or device of claim 3 or 4, wherein projection information data is representative of the structure of projection.

6. The method or the device of claim 4 or 5, wherein the method also comprises a step of or the device comprises means for encoding (180) said projection information data.

7. The method or device of one of the claims 3-6, wherein the volume ($C_j$) is a cube, a surface ($F_{i,j}$) is a face of said cube and the structure of projection is an octree-based structure of projection.

8. The method of one of the claims 1, 3-7 or the device of one of the claims 2-7, wherein the method also comprises steps of or the device also comprises means for:

- determining (130) an octree-based structure (IO) comprising at least one cube, by splitting recursively said encompassing cube (C) until the leaf cubes ($LOU_k$), associated with the leaf nodes of said octree-based structure (IO), reach down an expected size;
- encoding (140) another octree information data (FOID) representative of the octree-based structure (IO); and
- encoding each leaf cube ($LOU_k$), associated with the leaf nodes of said octree-based structure (IO), from steps c-e).

9. The method of claim 1, 3-8 or device of claim 2-8, wherein the method also comprises obtaining (100) a texture image ($TI_{i,j}$) per depth image by projecting the points of the point cloud onto a surface ($F_{i,j}$).

10. The method or the device of claim 9, wherein encoding (110) a depth image depends on the texture image associated with said depth image.

11. The method of one of the claims 1, 3-10 or device of claim 2-10, wherein the inverse-projected point cloud IPPC is obtained (120) by encoding and decoding said at least one depth image ($DI_{i,j}$) and by inverse-projecting said at least one decoded depth image ($DI_{i,j}$), or by encoding and decoding said at least one depth image ($DI_{i,j}$) and said at least one texture image ($TI_{i,j}$) and by inverse-projecting said at least one decoded depth image ($DI_{i,j}$) and said at least one decoded texture image ($TI_{i,j}$).

12. The method of one of the claims 1, 3-11, or the device of one of the claims 2-11, wherein the method also comprises step for or the device also comprises means for encoding (200) an image (I) obtained from the colors of leaf points located in cubes associated with leaf nodes of said at least one local octree-based structure ($O_k$), the colors of said leaf points being representative of the colors of the points of the point cloud (IPC).

13. A method for decoding, from at least one bitstream, a point cloud representing a 3D object, comprising:

- obtaining an inverse-projected point cloud (IPPC) by:

- decoding (2000), from a bitstream, at least one depth image;
- inverse-projecting (2010) said at least one decoded depth image, said inverse-projection being driven by projection information data representative of at least one surface ($F_{i,j}$);

f) decoding (2020), from a bitstream, a first leaf node information data (FLID) indicating if a local octree-based structure ($O_k$) has been determined for an encompassing cube including at least one point representing at least a part of the point cloud to be decoded;

g) if said first leaf node information data (FLID) indicates that a local octree-based structure ($O_k$) has been determined for said encompassing cube,

h) decoding (2020) an octree information data (SOID) representative of said determined local octree-based structure ($O_k$), and a second leaf node information data (SLID) indicating if a leaf cube of said local octree-based structure ($O_k$) includes a point representative of a part of the point cloud;

i) obtaining (2050) a local octree-based structure ($O_k$) for said encompassing cube from said octree information data (SOID);

j) determining (2060) if a leaf cube of said local octree-based structure ($O_k$) includes a point of the point cloud to be decoded from said second leaf node information data (SLID), and in this case, adding (2060) a leaf point to the leaf cube of said local octree-based structure (Ok); and

- obtaining (2080) a decoded point cloud by fusing said inverse-projected point cloud (IPPC) and said local octree-based structure ($O_k$).

14. A device for decoding, from at least one bitstream, a point cloud representing a 3D object, comprising means for:

- obtaining an inverse-projected point cloud (IPPC) by:

- decoding, from a bitstream, at least one depth image;
- inverse-projecting said at least one decoded depth image, said inverse-projection being driven by projection information data representative of at least one surface ($F_{i,j}$);

f) decoding, from a bitstream, a first leaf node information data (FLID) indicating if a local octree-based structure ($O_k$) has been determined for an encompassing cube including at least one point representing at least a part of the point cloud to be decoded;

g) if said first leaf node information data (FLID) indicates that a local octree-based structure ($O_k$) has been determined for said encompassing cube,

h) decoding an octree information data (SOID) representative of said determined local octree-based structure ($O_k$), and a second leaf node information data (SLID) indicating if a leaf cube of said local octree-based structure ($O_k$) includes a point representative of a part of the point cloud;

i) obtaining a local octree-based structure ($O_k$) for said encompassing cube from said octree information data (SOID);

j) determining if a leaf cube of said local octree-based structure ($O_k$) includes a point of the point cloud to be decoded from said second leaf node information data (SLID), and in this case, adding a leaf point to the leaf cube of said local octree-based structure (Ok); and

- obtaining a decoded point cloud by fusing said inverse-projected point cloud (IPPC) and said local octree-based structure ($O_k$).

15. The method of claim 13 or the device of claim 14, wherein the surface ($F_{i,j}$) is a face of a cube ($C_j$) of an octree-based structure of projection.

16. The method of claim 13 or 15 or the device of claim 14 or 15, wherein the method also comprises a step of or the device also comprises means for decoding, from a bitstream, projection information data representative of said at least one surface ($F_{i,j}$).

17. The method or the device of claim 15 or 16, wherein the method also comprises a step of or the device also comprises means for decoding, from a bitstream, projection information data representative of the octree-based structure of projection.

18. The method of one of the claims 13, 15-17 or the device of one of the claims 14-17, wherein the method also comprises a step of or the device also comprises means for:

- obtaining (2070) a global octree-based structure (GO) by:

- decoding (2020), from a bitstream, another octree information data (FOID);
- obtaining (2030) an octree-based structure (IO) from said another octree information data (FOID); and
- for each of the leaf cube ($LOU_k$) of said octree-based structure (10),

- obtaining (2020, 2040, 2050, 2060) a local octree-based structure ($O_k$) for said leaf cube ($LOU_k$) from steps f-j);
- obtaining (2070) the global octree-based structure (GO) by replacing a leaf node of the octree-based structure (IO) associated with said leaf cube ($LOU_k$) by said local octree-based structure ($O_k$); and

- obtaining (2080) a decoded point cloud by fusing said inverse-projected point cloud (IPPC) and said global octree-based structure (GO).

19. The method of one of the claims 13, 15-18 or the device of one of the claims 14-18, wherein the method also comprises a step of or the device also comprises means for decoding (2000) a texture image ($TI_{i,j}$) per depth image.

20. The method or the device of claim 19, wherein decoding (2000) a depth image depends on the texture image associated with said depth image.

21. The method of one of the claims 13, 15-20 or the device of one of the claims 14-20, wherein the method also comprises a step of or the device also comprises means for:

- obtaining (2110) the color of a point of the decoded point cloud (IIPC) by scanning a decoded image (I'), obtained (2090) by decoding a bitstream, according to a specific 2D path, and to ordered leaf cubes (2100) associated with the leaf nodes of said local octree-based structure ($O_k$) or said global octree-based structure (GO).

22. A signal carrying on at least one depth image ($DI_{i,j}$) obtained by orthogonally projecting points of an input colored point cloud (IPC) onto a surface ($F_{i,j}$) and a first leaf node information data (FLID) indicating if a local octree-based structure ($O_k$) has been determined for an encompassing cube including at least one point of said input colored point cloud (IPC).

23. The signal of claim 22, wherein the signal also carrying on a first octree information data (FOID) representative of an octree-based structure (IO), for each leaf cube associated with the leaf nodes of said octree-based structure (IO), a first leaf node information data (FLID) indicating if a local octree-based structure ($O_k$) has been determined for said leaf cube.

24. The signal of claim 22 or 23, wherein the signal also carries a second octree information data (SOID) representative of a local octree-based structure ($O_k$), and a second leaf node information data (SLID) indicating if a leaf cube of said local octree-based structure ($O_k$) includes a point representative of a part of the point cloud (IPC).

**Fig. 1a**

**Fig. 1b**

depth 0

depth 1

maximum depth

**Fig. 2**

100

$\{ C_{j,} \}$ → [ 300 ] $\{ F_{i,j} \}$ → [ 310 ] $\{ DI_{i,j} \}$ →

IPC →

**Fig. 3**

300

$\{ C_{j,} \}$ → [ 400 ] $\{ DI_{i,j} \}$ → [ 410 ] $\{ Q(F_{i,j}) \}$ → [ 420 ] $\{ F_{i,j} \}$ →

IPC →

**Fig. 4**

150

LOU$_k$

IPC → 520

500  → {O$_{k,n}$}

510

{P$_{k,n}$}

{R$_{k,n}$}

{P$_{k,IP}$}
{P$_{k,NEI}$}
{P$_{k,OR}$}

530  {D$_{k,n}$} → 540

{C$_{k,n}$}

O$_k$ ← 550

**Fig. 5**

Fig. 6

**Fig. 7**

190

IO

$\{O_k\}$

800

$\{LN_k\}$

810

I

FI

3D path

2D path

**Fig. 8**

5

6

2

1

7

4

3

0

**Fig. 9**

3D path

$\{25,2,5,13,3,31,61,99, \bullet\bullet\bullet\}$

2D path

| 25 | 2 | 5 | 13 | 3 |
|----|---|---|----|---|
| 31 | 61 | 99 | ••• | |
| | | | | |
| | | | | |

25 2 3 31 61 99

5 13

**Fig. 10**

Fig. 11

Fig. 12

800

1310

$$\left[ \Omega_0, \ldots, \Omega_7 \right]$$

$$\Omega_p$$

1320

$$\left[ n_0, \ldots, n_7 \right]$$

**Fig. 13**

**Fig. 14**

**Fig. 15**

Fig. 16

Fig. 17

I

Ordered 3D points

Fig. 18

Ordered 3D points

I

Fig. 19

**Fig. 20a**

**Fig. 20b**

**Fig. 21**

2200

2202    2205

2203    2206

2204

2201

**Fig. 22**

A ⟷ NET ⟷ B

**Fig. 23**

| H | PAYLOAD |
|---|---|

**Fig. 24**

Europäisches
Patentamt

European
Patent Office

Office européen
des brevets

**EUROPEAN SEARCH REPORT**

Application Number

EP 17 30 5930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 321 894 A2 (SAMSUNG ELECTRONICS CO LTD [KR]) 25 June 2003 (2003-06-25) | 13-24 | INV.<br>H04N19/597<br>G06T17/00 |
| Y | * abstract; figures 2, 4, 14, 20, 21, 53, 54 *<br>* paragraphs [0008] - [0015], [0038], [0040] - [0052], [0060], [0066], [0067], [0083], [0116] - [0129], [0149] - [0151] *<br>* paragraphs [0171] - [0175], [0188] - [0190], [0204] - [0207], [0218], [0234], [0329] - [0332], [0304] * | 1-12 | G06T17/10<br>G06T9/40<br>H04N19/96<br>H04N19/20<br>H04N19/147 |
| X | EP 1 271 410 A2 (SAMSUNG ELECTRONICS CO LTD [KR]) 2 January 2003 (2003-01-02) | 13,14, 22-24 | |
| A | * abstract *<br>* paragraphs [0001] - [0005], [0010] - [0013], [0018] - [0024], [0034] - [0041] * | 1-12, 15-21 | |
| X | ISO/IEC JTC1/SC29/WG1: "Technical report of the joint ad hoc group for digital representations of light/sound fields for immersive media applications", 72. JPEG MEETING;29-5-2016 - 3-6-2016; GENEVA; (JOINT PICTURE EXPERT GROUP OR ISO/IEC JTC1/SC29/WG1); URL: HTTPS://WWW.ISO.ORG,, no. wg1m72019, 14 December 2016 (2016-12-14), XP030190125, | 13,14, 22-24 | TECHNICAL FIELDS SEARCHED (IPC)<br><br>H04N<br>G06T |
| A | * pages 31, 32 *<br>* pages 39-42 * | 1-12, 15-21 | |

-/--

The present search report has been drawn up for all claims

| Place of search | Date of completion of the search | Examiner |
|---|---|---|
| Munich | 23 October 2017 | Cakiroglu Garton, S |

EPO FORM 1503 03.82 (P04C01)

page 1 of 2

Europäisches
Patentamt

European
Patent Office

Office européen
des brevets

**EUROPEAN SEARCH REPORT**

Application Number

EP 17 30 5930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 431 919 A1 (SAMSUNG ELECTRONICS CO LTD [KR]; SEOUL NAT UNIV IND FOUNDATION [KR]) 23 June 2004 (2004-06-23) * abstract; figures 3,5-7, 16-23 * * paragraphs [0001], [0010] - [0019], [0039], [0041], [0046], [0047] * | 1-12 | |
| A | BIRENDRA KATHARIYA (UMKC) ET AL: "Dynamic Geometry Compression with Binary Tree Based Prediction and Residual Coding", 118. MPEG MEETING; 3-4-2017 - 7-4-2017; HOBART; (MOTION PICTURE EXPERT GROUP OR ISO/IEC JTC1/SC29/WG11),, no. m40607, 31 March 2017 (2017-03-31), XP030068952, * paragraphs [0001] - [0003]; figure 5 * | 1-24 | |
| A | RICARDO L DE QUEIROZ ET AL: "Motion-Compensated Compression of Dynamic Voxelized Point Clouds", MPEG 115TH MEETING GENEVA, 25 May 2016 (2016-05-25), XP055395321, * abstract * * paragraphs [00IV], [000V] * | 1-24 | TECHNICAL FIELDS SEARCHED (IPC) |
| A | KALAIAH ET AL.: "Statistical Geometry Representation for Efficient Transmission and Rendering", ACM, 2 PENN PLAZA, SUITE 701 - NEW YORK USA, vol. 24, no. 2, 1 April 2005 (2005-04-01), pages 348-373, XP040018890, * the whole document * | 1-24 | |

The present search report has been drawn up for all claims

| Place of search | Date of completion of the search | Examiner |
|---|---|---|
| Munich | 23 October 2017 | Cakiroglu Garton, S |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 30 5930

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2017

| Patent document cited in search report | | Publication date | Patent family member(s) | | Publication date |
|---|---|---|---|---|---|
| EP 1321894 | A2 | 25-06-2003 | CA | 2413056 A1 | 27-05-2003 |
| | | | CN | 1432969 A | 30-07-2003 |
| | | | EP | 1321894 A2 | 25-06-2003 |
| | | | JP | 3957620 B2 | 15-08-2007 |
| | | | JP | 4629005 B2 | 09-02-2011 |
| | | | JP | 2003296755 A | 17-10-2003 |
| | | | JP | 2006318503 A | 24-11-2006 |
| EP 1271410 | A2 | 02-01-2003 | CA | 2391673 A1 | 29-12-2002 |
| | | | CN | 1395222 A | 05-02-2003 |
| | | | EP | 1271410 A2 | 02-01-2003 |
| | | | ES | 2351961 T3 | 14-02-2011 |
| | | | JP | 3840150 B2 | 01-11-2006 |
| | | | JP | 2003051026 A | 21-02-2003 |
| | | | KR | 20030002995 A | 09-01-2003 |
| | | | RU | 2216781 C2 | 20-11-2003 |
| | | | US | 2003001838 A1 | 02-01-2003 |
| EP 1431919 | A1 | 23-06-2004 | CN | 1549206 A | 24-11-2004 |
| | | | EP | 1431919 A1 | 23-06-2004 |
| | | | JP | 4166679 B2 | 15-10-2008 |
| | | | JP | 2004185628 A | 02-07-2004 |

EPO FORM P0459

For more details about this annex : see Official Journal of the European Patent Office, No. 12/82